Europäisches Patentamt

European Patent Office

Office européen des brevets

(11) Numéro de publication: **0 217 683**
**A1**

(12) ## DEMANDE DE BREVET EUROPEEN

(21) Numéro de dépôt: **86401618.3**

(22) Date de dépôt: **21.07.86**

(51) Int. Cl.⁴: **C 12 G 1/02**

(30) Priorité: **22.07.85 FR 8511292**

(43) Date de publication de la demande:
**08.04.87 Bulletin 87/15**

(84) Etats contractants désignés:
**AT BE CH DE FR IT LI LU**

(71) Demandeur: **SOCIETE AUDOISE DE REPRESENTATION DE RECHERCHES ET D'ETUDES S.A.R.R.E. Société à Responsabilité Limitée**
**Avenue Ernest Léotard**
**F-11150 Bram(FR)**

(72) Inventeur: **Vidal, Jacques**
**4, rue Jean-Bart**
**F-11150 Bram(FR)**

(72) Inventeur: **Monard, André**
**7, chemin de la Grive**
**F-31250 L'Uion(FR)**

(74) Mandataire: **Barre, Philippe et al,**
**Cabinet Barre-Gatti-Laforgue 95 rue des Amidonniers**
**F-31069 Toulouse Cédex(FR)**

(54) **Procédé de vinification par macération carbonique et installation de vinification.**

(57) L'invention concerne un procédé de vinification d'une vendange du type dans lequel on introduit la vendange dans des cuves de fermentation (1) sous atmosphère de gaz carbonique, en vue de réaliser une macération carbonique de celle-ci ; selon l'invention, immédiatement avant la mise en cuve, on soumet la vendange à un rayonnement de micro-ondes ou ondes hautes fréquences dans un four (4) de puissance adaptée pour porter les raisins à une température sensiblement uniforme comprise entre 28 C et 35°C. La vendange est amenée à défiler en continu en couches minces dans le four (4) constitué par un four-tunnel et est irradiée au cours de ce défilement avant d'être dirigèe vers les cuves. Le procédé conforme à l'invention accroft notablement la qualité aromatique des vins obtenus et garantit le déroulement dans les meilleures conditions de la fermentation intracellulaire qui caractérise la macération carbonique.

EP 0 217 683 A1

./...

Fig. 1

# PROCEDE DE VINIFICATION PAR MACERATION CARBONIQUE
## ET INSTALLATION DE VINIFICATION

L'invention concerne un procédé de vinification par macération carbonique et une installation de vinification permettant sa mise en oeuvre.

La vinification par macération carbonique est bien connue des spécialistes et consiste à disposer les raisins entiers dans des cuves sous atmosphère de gaz carbonique de façon à susciter une fermentation intracellulaire anaérobie des grains ; pour amorcer cette réaction et lui permettre de se dérouler dans de bonnes conditions, il est nécessaire de porter les raisins à une température de l'ordre de 30 à 35° C. Un tel procédé de vinification accroît la qualité et la puissance des arômes des vins obtenus par rapport à ceux obtenus par les procédés de fermentation bactérique plus traditionnels.

On pourra notamment se reporter aux publications suivantes qui décrivent des procédés de vinification par macération carbonique :

(1) "Qualité des vins en rapport avec les nouvelles techniques de vinification" F. Mujdaba et al, Bull. O.I.V. 1969, 464, p. 1086-1106,

(2) "Techniques nouvelles de vinification" E. Nègre et al, Bull. O.I.V. 1971, 487, p. 827-848,

(3) "Vinification par macération carbonique - Préchauffage de la vendange" C. Planzy et al, Ann. Technol. 1980, 29 (I) p. 13-25,

(4) "Vinification par macération carbonique - Utilisation de moût ou de vin pour le rechauffage de la vendange" A.M. Riquet et al, Sciences des aliments, 1982, 2, p. 341-363,

(5) Demande de brevet FR n° 2 545 500 "Procédé et installation pour la vinification sous pression de gaz carbonique".

Les techniques de chauffage de la vendange utilisées jusqu'à l'heure actuelle pour amorcer cette macération carbonique consistent essentiellement à immerger momentanément la vendange dans un fluide caloporteur dont la température est de l'ordre de 50 à 65° C ; ce fluide peut notamment être un moût ou un jus de récupération ou même du vin précédemment élaboré. Généralement, ce fluide est déversé en jets brisés à la surface supérieure de la cuve contenant la vendange jusqu'à submersion de celle-ci ; après un certain temps de contact, le liquide est retiré par gravité. La publication (5) précitée évoque également la possibilité d'équiper la cuve d'une enveloppe chauffante permettant d'assurer un chauffage indirect par circulation d'un fluide thermique.

Toutefois, comme cela sera mis en évidence plus loin par comparaison avec le procédé de l'invention, ces techniques ne permettent pas de profiter pleinement des avantages de la macération carbonique (ces avantages sont dus au phénomène de fermentation intracellulaire à l'abri de l'oxygène, phénomène qui tend à révéler les arômes contenus dans les raisins et à fournir des vins de haute qualité, très aromatiques) ; en effet on a pu constater que la mise en oeuvre de ces techniques connues engendrait la destruction d'une proportion sensible des arômes de la vendange et faisait perdre aux vins une partie de leurs qualités aromatiques (ces vins demeurant toutefois aromatiquement supérieurs aux vins provenant de fermentations alcooliques aérobies).

Par ailleurs, on connaît dans le domaine viticole, d'autres procédés de chauffage de vendange en vue de thermo-vinifications alcooliques consistant à soumettre les raisins à un traitement à la vapeur (température de l'ordre de 80° C) immédiatement suivi d'un refroidissement par ventilation (brevets FR 2 182 670 et 1 496 803). Toutefois, ces traitements qui soumettent temporairement les raisins à des températures très élevées sont totalement inadaptés à la vinification par macération carbonique.

La présente invention se propose de fournir un procédé amélioré de vinification par macération carbonique, permettant d'accroître la qualité aromatique des vins obtenus et garantissant le déroulement de la fermentation intracellulaire dans les meilleures conditions.

3                                           0217683

Un autre objectif de l'invention est de fournir une installation autorisant une mise en oeuvre simple du procédé visé, sans besoin de main-d'oeuvre supplémentaire par rapport aux installations de vinification traditionnelles.

Un autre objectif est de fournir une installation utilisable le cas échéant dans d'autres types de vinification.

A cet effet, le procédé visé par l'invention est du type dans lequel on introduit la vendange dans des cuves de fermentation sous atmosphère de gaz carbonique, et se caractérise en ce que, immédiatement avant la mise en cuve, on soumet la vendange à un rayonnement de micro-ondes ou d'ondes hautes fréquences, de puissance adaptée pour porter les raisins à une température sensiblement uniforme comprise entre 28° C et 35° C.

Par "micro-ondes", on désigne de façon habituelle des ondes électromagnétiques de fréquence approximativement comprise entre 100 et 300 000 mégahertz ; (ces ondes sont également désignées par "ondes hyperfréquences"). Il est en particulier possible d'utiliser des micro-ondes de fréquence industrielle (2450 Mhz). Par "ondes hautes fréquences", on désigne des ondes électromagnétiques de fréquence approximativement comprise entre 3 et 100 Mhz.

Selon un mode de réalisation préféré, la vendange est amenée à défiler en continu en couche mince et est irradiée au cours de ce défilement avant d'être dirigée vers les cuves de fermentation.

Le procédé de l'invention fournit des vins de qualités aromatiques remarquables (bouquet, goût, saveur). L'explication de cette qualité accrue par rapport aux vins obtenus par les procédés connus de macération carbonique semble être la suivante :

La macération carbonique est un phénomène de fermentation anaérobie qui se déroule au coeur des grains, à l'intérieur des cellules de la baie ; ce phénomène produit une transformation des sucres et acides en alcools sans aucune dégradation des arômes. Pour s'amorcer et se dérouler de façon satisfaisante, ce phénomène exige une température de l'ordre de 28° C à 35° C dans les zones mêmes qui en sont le siège, c'est-à-dire au coeur des grains. En outre, dans un grain de raisin, les arômes sont essentiellement localisés en surface du grain, juste au-dessous de la peau de celui-ci ; ces arômes sont très sensibles à la température et l'on a pu mettre en évidence qu'ils étaient en partie détruit à partir de températures de l'ordre de 37° à 40° C, leur destruction devenant très vite importante pour des températures plus élevées.

Or dans les procédés connus dans lesquels le préchauffage est effectué par conduction thermique, la température de la vendange est très hétérogène et ce, à deux niveaux :

(a) d'une part, au niveau de chaque grain, où la température est beaucoup plus élevée en surface qu'à coeur,

(b) d'autre part, au niveau de l'ensemble de la vendange qui comporte des zones locales de surchauffe (zones préférentielles de passage des calories).

Cette hétérogénéité d'ensemble (b) a d'ailleurs été constaté par les auteurs de la publication (4) précitée qui souligne (p. 355) :

"Quel que soit le mode d'apport du fluide caloporteur (arrosage de la surface supérieure de la vendange, injection par le robinet d'égouttage), un gradient de température se manifeste dans les cuves. Les zones supérieures sont plus chaudes que les zones inférieures durant la majeure partie de la première étape de fermentation. La température la plus élevée se situe principalement au centre de la zone supérieure alors que l'endroit équivalent de la zone inférieure est le plus froid.

Le fluide caloporteur semble suivre des circuits préférentiels dans la vendange tant au moment de la submersion qu'à celui de la vidange de la cuve. Ceci rejoint nos observations précédentes (FLANZY et al., 1980). Les systèmes de préchauffage étudiés ne permettent pas une homogénéisation de la température dans une cuve de vendange entière."

Dans ces conditions, pour obtenir au coeur de la majorité des grains une température suffisante pour permettre un amorçage satisfaisant de la fermentation intracellulaire, les procédés connus conduisent inévitablement à chauffer de façon excessive la superficie des grains ainsi que certaines zones de la vendange, ce qui entraîne la destruction d'une partie notable des arômes.

Au contraire, le procédé de l'invention engendre une homogénéité remarquable de la température par l'effet de dissipation de l'énergie au sein même de la matière : d'une part, chaque grain est chauffé uniformément à coeur et en superficie, d'autre part, l'ensemble des grains est chauffé de la même manière, puisque ceux-ci sont soumis à la même densité de puissance électromagnétique. Il est ainsi possible de combiner à la fois les deux effets suivants pour chaque grain :

. obtention d'une température à coeur appropriée pour amorcer la fermentation intracellulaire et en permettre le déroulement dans les meilleures conditions,

. limitation de la température de surface pour éviter toute destruction des arômes.

Il est à noter qu'un autre avantage de l'invention réside dans la durée constante et relativement courte de la macération qui s'opère en 8 à 12 jours environ, alors que cette durée peut se prolonger dans les procédés connus jusqu'à plus de 20 jours. On sait qu'un gain sur la durée d'occupation des cuves constitue en pratique un avantage important dans une cave.

De préférence, l'énergie électromagnétique reçue par les raisins lors de l'irradiation est régulée en vue de porter ceux-ci à une température de consigne (Tc) comprise entre 30 et 32° C. Cette régulation précise est possible avec les micro-ondes et garantit l'obtention des deux effets ci-dessus évoqués.

Selon un premier mode de mise en oeuvre, la régulation de l'énergie électromagnétique reçue par les raisins est assurée en détectant la température des raisins après irradiation ($T_s$) et en réglant leur vitesse de défilement dans la zone d'irradiation en fonction de cette température ($T_s$) dans le sens tendant à amener cette dernière à coïncider avec la température de consigne ($T_c$). Cette régulation permet d'utiliser des générateurs d'ondes électromagnétiques non réglables en puissance, qui sont moins onéreux ; il suffit de prévoir une puissance nominale installée compatible avec les conditions climatiques les plus mauvaises admises, la régulation de température s'effectuant en jouant sur la vitesse de défilement des produits.

Selon un autre mode de mise en oeuvre, la régulation de l'énergie électromagnétique reçue par les raisins est assurée en détectant la température des raisins après irradiation ($T_s$) et en modulant la puissance d'irradiation en fonction de cette température ($T_s$), dans le sens tendant à amener cette dernière à coïncider avec la température de consigne ($T_c$). Cette mise en oeuvre requiert des générateurs d'ondes de puissance réglable et sera préférée pour les petites caves ayant des débits relativement faibles à traiter : les faibles puissances installées permettent alors de prévoir un générateur d'ondes de puissance réglable, dont le coût est compatible avec l'application visée dans cette gamme de puissance. Pour des caves traitant de gros débits, la régulation par variation de la vitesse de défilement sera préférée en pratique car elle conduit à des installations de coûts plus réduits.

L'invention s'étend à une installation de vinification permettant notamment de mettre en oeuvre le procédé précédemment défini ; cette installation du type comprenant au moins une cuve de fermentation et un transporteur continu adapté pour amener la vendange à défiler depuis une zone de réception jusqu'aux cuves de fermentation, se caractérise en ce qu'un four à micro-ondes ou à ondes hautes fréquences est interposé sur le trajet de la vendange, ledit four étant équipé de moyens de régulation de l'énergie électromagnétique reçue par les raisins.

Compte tenu des conditions climatiques régnant en France, la puissance électromagnétique installée peut en particulier être comprise entre 5 et 20 Kilowatts par tonne-heure de raisins traités.

D'autres caractéristiques, buts et avantages de l'invention se dégageront de la description qui suit en référence aux dessins annexés, lesquels présentent à titre d'exemples non limitatifs un mode de réalisation d'une installation conforme à l'invention ainsi que des variantes ; sur ces dessins qui font partie intégrante de la présente description :

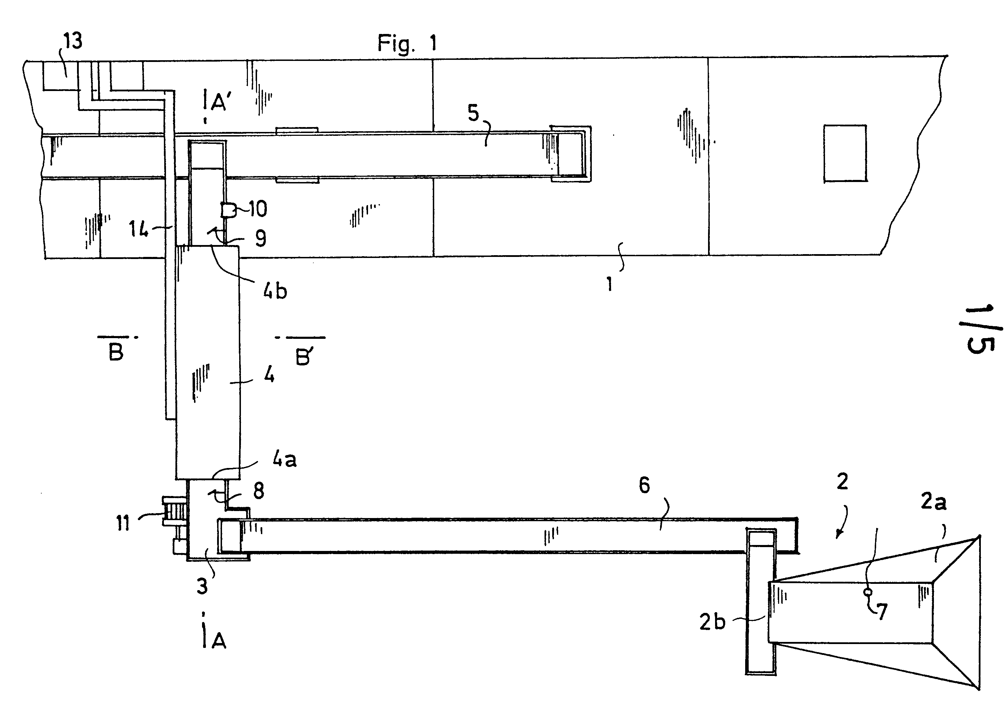

        - la figure 1 est une vue schématique en plan d'une installation conforme à l'invention,

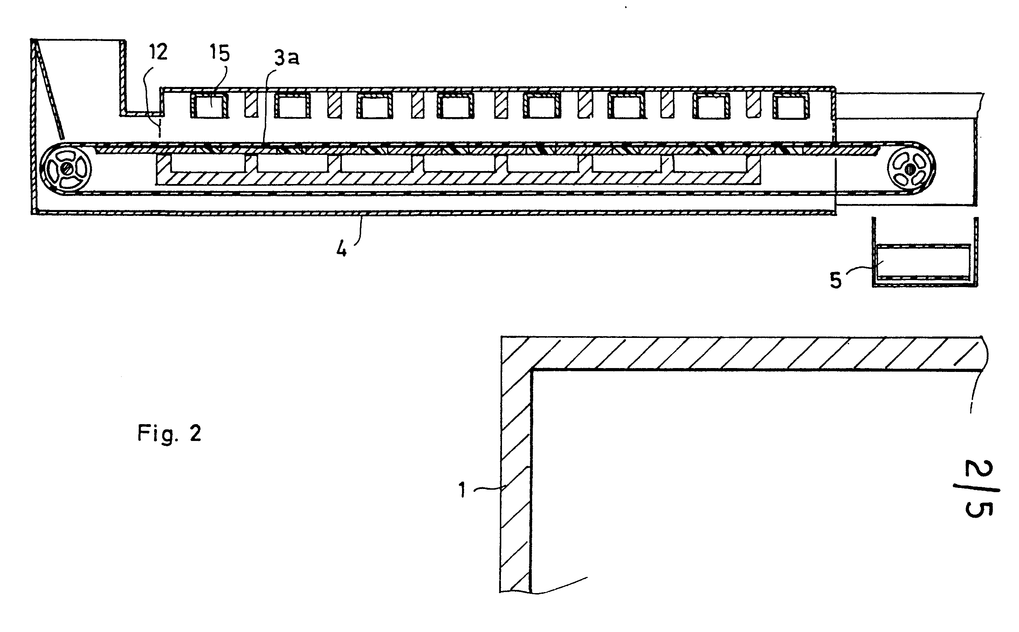

        - la figure 2 en est une coupe par un plan A A',

        - la figure 3 en est une coupe partielle par un plan B B',

        - la figure 4 est un schéma des moyens de régulation équipant ladite installation, cependant que la figure 5 est un organigramme illustrant le programme de régulation mis en oeuvre dans ces moyens,

        - la figure 6 est un schéma d'une variante des moyens de régulation et la figure 7 en est l'organigramme correspondant.

        L'installation de vinification représentée aux figures comprend plusieurs cuves de fermentation telles que 1, qui en l'exemple sont juxtaposées. Ces cuves sont d'un type classique et destinées à assurer une macération carbonique de la vendange sous atmosphère de gaz carbonique ; l'entrée des cuves est située en partie supérieure de chacune de celles-ci.

        Un transporteur permet d'amener la vendange depuis une zone de réception 2 où elle est déversée sous forme de raisins entiers intacts, jusqu'à l'entrée des dites cuves.

        En l'exemple ce transporteur comprend :

        - un convoyeur 3 à bande transporteuse transparente ou peu absorbante à l'égard des micro-ondes, qui traverse un four-tunnel à micro-ondes 4,

        - un autre convoyeur à bande transporteuse 5 qui reçoit les raisins déversés par le convoyeur 3 et est disposé en position mobile au-dessus des cuves de façon à pouvoir déverser les raisins tour à tour dans chacune de celles-ci,

        - un convoyeur d'entrée 6 qui est disposé en position inclinée depuis la zone de réception 2 jusqu'au convoyeur 3 en vue d'amener les raisins vers celui-ci.

La zone de réception peut comprendre une trémie de réception 2a qui déverse les raisins sur un court convoyeur 2b lequel les amène sur le convoyeur d'entrée 6. Les raisins défilent sur les convoyeurs en couche mince d'épaisseur de l'ordre de 3 à 5 cm environ.

Dans la trémie de réception 2a est disposée une sonde de température symbolisée en 7 qui fournit à chaque instant la température d'entrée des raisins $Te$ ; cette sonde est de tout type connu apte à délivrer un signal électrique représentatif de la température détectée.

Le convoyeur 3 est doté en amont du four-tunnel 4 d'un premier détecteur de présence de raisins symbolisé en 8 qui possède un état R correspondant à la présence de raisins sur ledit convoyeur, et un état différent $\overline{R}$ correspondant à l'absence de raisins ; le changement d'état $\overline{R} \rightarrow R$ correspond à l'apparition de raisins sur le convoyeur et conditionne la génération d'un signal électrique d'apparition, cependant que le changement $R \rightarrow \overline{R}$ conditionne la génération d'un signal de disparition. Ce détecteur de présence peut être de tout type connu : cellule photoélectrique dont le rayon est le cas échéant interrompu par la couche de raisins, levier mécanique repoussé par ladite couche...

De plus le convoyeur 3 est doté en aval du four-tunnel 4 d'un second détecteur de présence de raisins symbolisé en 9. Ce détecteur analogue au premier engendre un signal électrique d'apparition lors des changements $\overline{R} \rightarrow R$, et un signal électrique de disparition lors des changements d'état $R \rightarrow \overline{R}$ ; en outre un capteur de température symbolisé en 10 est également disposé à l'aval du four-tunnel 4 en vue de délivrer un signal électrique représentatif de la température $T_s$ détectée à ce niveau. Ce capteur peut en particulier être d'un type connu à infra-rouge, mesurant la température au moyen d'un rayonnement infra-rouge.

Le convoyeur 3 est disposé en position sécante (en l'exemple perpendiculaire) par rapport au convoyeur 5 de façon à déverser les raisins sur ce dernier quelle que soit sa position. En l'exemple représenté, le convoyeur 5 peut être mû selon une translation parallèle à son axe longitudinal en vue de disposer son extrémité au-dessus de l'entrée de la cuve 1 à remplir.

En outre le convoyeur 3 est équipé d'un moteur d'entraînement associé à un variateur de vitesse 11. Ce dernier permet de faire varier la vitesse de défilement de la bande transporteuse entre une vitesse nulle et une vitesse maximale qui peut être de l'ordre de 1,5 m/s.

Le four-tunnel 4 est de type connu en soi et délimite une cavité intérieure s'étendant entre une entrée des raisins 4a et une sortie 4b ; cette cavité est en exemple rectiligne et peut s'étendre sur une longueur de l'ordre de 4 m.

La bande transporteuse du convoyeur 3 comporte un brin actif supérieur 3a qui traverse ladite cavité et se déplace entre son entrée et sa sortie. Cette bande peut être réalisée par des mailles en un matériau transparent à l'égard des micro-ondes (polytétrafluoroéthylène, fibres de verre...). Elle glisse sur une sole dotée de plaques transparentes aux micro-ondes dans les parties irradiées et qui possède un faible coefficient de friction.

A l'entrée et à la sortie du tunnel, des moyens de filtrage classiques 12 forment une barrière au passage des micro-ondes, tout en autorisant le passage de la bande 3a et des raisins.

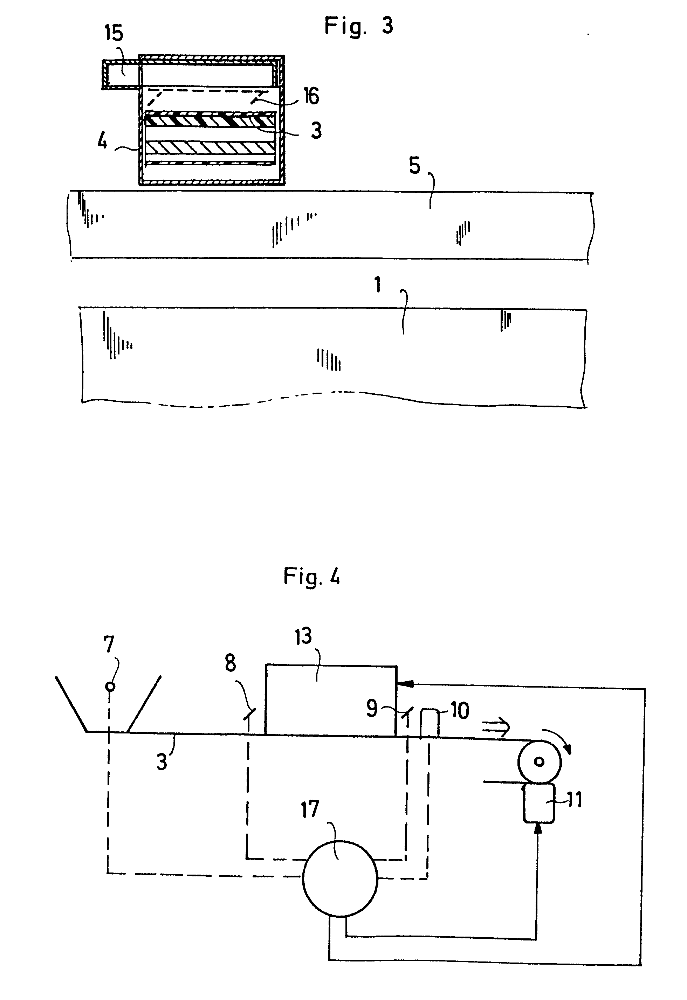

Le four est équipé d'un générateur de micro-ondes 13 (composé d'un ou plusieurs magnétrons) qui, par l'entremise de guide-d'ondes 14, alimente des applicateurs tels que 15 répartis le long du tunnel. Chaque applicateur irradie une zone du four. Des moyens d'uniformisation du champ électromagnétique sont prévus à l'intérieur du four ; ces moyens symbolisés en 16 à la figure 3 peuvent être de tout type connu (système mécanique à plaques métalliques oscillantes ou autre).

La structure du four composée d'une ossature, de tôles de fermetures, de cloisons d'isolation... est classique en elle-même.

Le générateur émet des micro-ondes de fréquence industrielle (2450 Mhz), sa puissance installée étant de l'ordre de 10 Kilowatts/tonne-heure de raisins.

En outre le four 4 est équipé de moyens de régulation schématisés à la figure 4, qui commandent, d'une part, la mise en marche ou l'arrêt du générateur 13, d'autre part, la vitesse de rotation du moteur 11 et donc la vitesse de défilement des raisins à l'intérieur du four. L'énergie électromagnétique reçue par ces raisins est une fonction inverse de cette vitesse qui permet ainsi de réguler l'énergie dissipée dans les grains et donc leur température de sortie $T_s$.

A cet effet les moyens de régulation comprennent une unité de commande 17 de type classique à micro-processeur, qui est adaptée pour commander le variateur du moteur 11 afin d'ajuster la vitesse du convoyeur 3 en fonction de la température de sortie détectée $T_s$ et d'une température de consigne $T_c$ préalablement mémorisée.

De plus ces moyens de régulation sont adaptés pour commander la mise en fonctionnement du générateur de micro-ondes 13 lors du changement d'état du détecteur de présence 8 correspondant à l'apparition de raisins et pour commander l'arrêt de ce générateur lors du changement d'état du détecteur de présence 9 correspondant à la disparition des raisins.

En phase de démarrage, après génération du signal d'apparition par le détecteur 8, les moyens de régulation sont programmés pour ajuster la vitesse du variateur 11 à une vitesse calculée fonction de l'écart entre la température d'entrée $T_e$ (détectée par la sonde 7) et la température de consigne $T_c$.

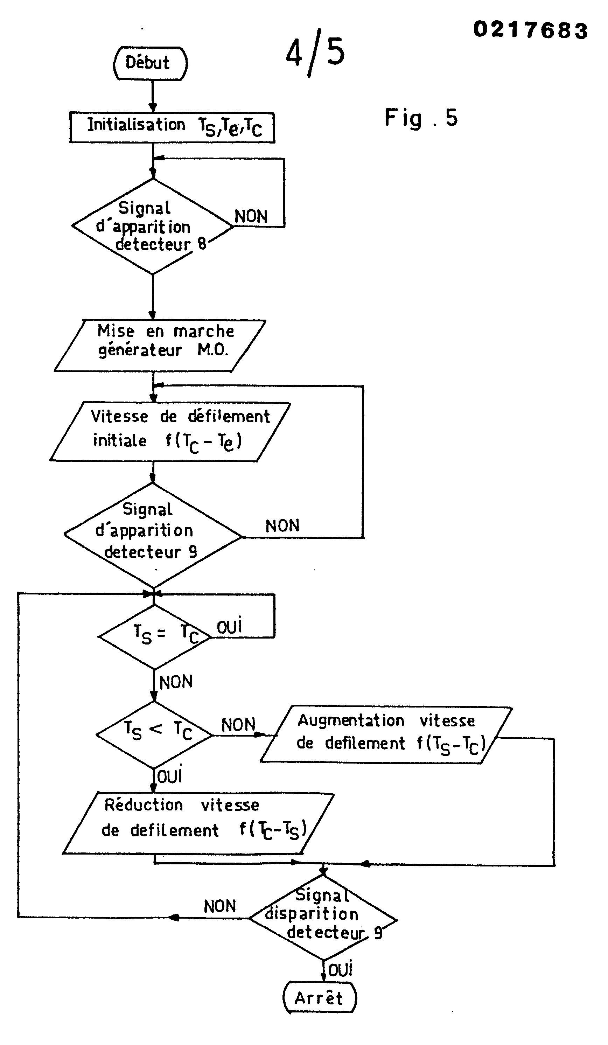

Le programme de régulation mémorisé dans les moyens de régulation et suivi par ces derniers est illustré à la figure 5.

Lorsque l'installation est mise sous tension, une étape préalable d'initialisation des mémoires vives est réalisée ; les températures $T_s$ et $T_e$ sont remises à zéro et la température de consigne $T_c$ est programmée à la valeur appropriée, soit au moyen d'un clavier qui permet à un opérateur de l'entrer dans la machine, soit par lecture automatique dans une mémoire morte où elle a été inscrite. Cette température de consigne $T_c$ est de préférence fixée à une valeur comprise entre 30 et 32° C.

Un test d'apparition des raisins est ensuite effectué sur le signal de sortie du détecteur 8.

Lorsque ce signal passe de l'état $\overline{R}$ à l'état R, une instruction de mise en marche du générateur micro-ondes 13 commande l'irradiation à la puissance nominale du générateur.

Une instruction commande ensuite le calcul de la vitesse initiale de défilement en fonction de l'écart entre la température d'entrée $T_e$ et la température de consigne $T_c$ et engendre l'envoi d'un signal de commande correspondant vers le variateur du moteur 11. La vitesse initiale de défilement sera d'autant plus rapide que l'écart $T_c - T_e$ est faible de sorte que les raisins reçoivent l'énergie électromagnétique théoriquement nécessaire pour les porter à cette température de consigne $T_c$.

Un test de présence de raisins est ensuite pratiqué sur le signal de sortie du détecteur 9.

En cas d'apparition des raisins au niveau de ce détecteur, un test de comparaison est effectué entre la température de sortie détectée par le capteur 10 et la température de consigne $T_c$.

En cas d'inégalité un test de sens de l'inégalité conduit soit à une instruction d'augmentation de la vitesse de défilement ($T_s > T_c$) soit à une instruction de réduction de cette vitesse ($T_s < T_c$). L'augmentation ou la réduction de vitesse est calculée en fonction de l'écart entre $T_s$ et $T_c$ de façon à réduire cet écart et à tendre à amener $T_s$ à coïncider avec $T_c$.

Un test de disparition des raisins au niveau du détecteur 9 est ensuite pratiqué et conduit soit à un arrêt du générateur en cas de disparition, soit à un rebouclage sur le test de comparaison en cas de présence de raisins.

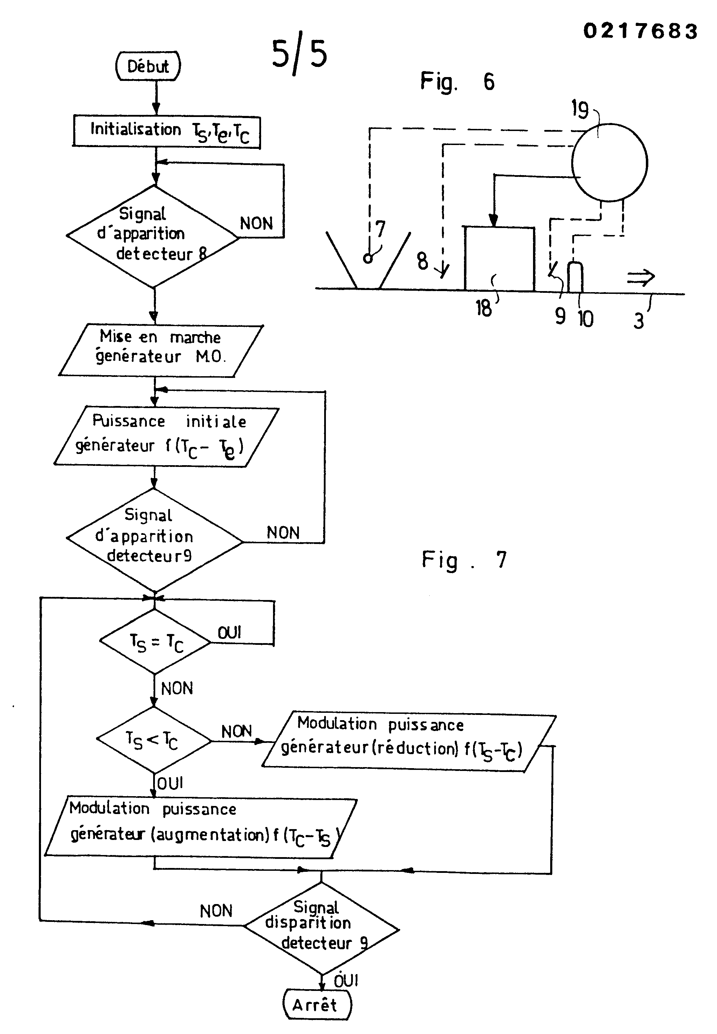

Par ailleurs, les figures 6 et 7 concernent une variante de l'installation précédente, dans laquelle la régulation est effectuée par réglage ou modulation de la puissance rayonnée par le générateur de micro-ondes. A cet effet, on prévoit dans cette installation un générateur 18 de puissance réglable entre 0 et une valeur maximale de l'ordre de 20 Kilowatts/tonne-heure de raisins.

L'unité de commande 19 est dans ce cas adaptée pour moduler la puissance délivrée en fonction de la température de sortie $T_s$ détectée et d'une température de consigne $T_c$ préalablement mémorisée.

En outre, comme précédemment les moyens de régulation sont adaptés pour commander la mise en fonctionnement du générateur 18 lors du changement d'état du détecteur de présence 8 correspondant à l'apparition de raisins, et pour commander l'arrêt de ce générateur lors du changement d'état du détecteur de présence 9 correspondant à la disparition des raisins.

En phase de démarrage, après génération du signal d'apparition par le détecteur 8, les moyens de régulation sont programmés pour régler la puissance initiale du générateur 18 à un niveau calculé, fonction de l'écart entre la température d'entrée $T_e$ (détectée par la sonde 7) et la température de consigne $T_c$.

Le logigramme correspondant à cette régulation est illustré à la figure 7 et s'interprète de façon analogue à celui de la figure 5.

REVENDICATIONS

1/ Procédé de vinification d'une vendange composée en majeure partie de raisins entiers, du type dans lequel on introduit la vendange dans des cuves de fermentation sous atmosphère de gaz carbonique en vue de réaliser une macération carbonique de celle-ci, caractérisé en ce que, immédiatement avant la mise en cuve, on soumet la vendange à un rayonnement de micro-ondes ou ondes hautes fréquences, de puissance adaptée pour porter les raisins à une température sensiblement uniforme comprise entre 28° C et 35° C.

2/ Procédé de vinification selon la revendication 1, caractérisé en ce que la vendange est amenée à défiler en continu en couche mince et est irradiée au cours de ce défilement avant d'être dirigée vers les cuves de fermentation.

3/ Procédé de vinification selon l'une des revendications 1 ou 2, caractérisé en ce que l'on régule l'énergie électromagnétique reçue par les raisins lors de l'irradiation en vue de les porter à une température de consigne $(T_c)$ comprise entre 30 et 32° C.

4/ Procédé de vinification selon les revendications 2 et 3 prises ensemble, caractérisé en ce que l'on régule l'énergie électromagnétique reçue par les raisins en détectant la température des raisins après irradiation $(T_s)$ et en réglant leur vitesse de défilement dans la zone d'irradiation en fonction de cette température $(T_s)$ dans le sens tendant à amener cette dernière à coïncider avec la température de consigne $(T_c)$.

5/ Procédé de vinification selon les revendications 2 et 3 prises ensemble, caractérisé en ce que l'on régule l'énergie électromagnétique reçue par les raisins en détectant la température des raisins après irradiation $(T_s)$ et en modulant la puissance d'irradiation en fonction de cette température $(T_s)$ dans le sens tendant à amener cette dernière à coïncider avec la température de consigne $(T_c)$.

6/ Procédé de vinification selon l'une des revendications 4 ou 5, caractérisé en ce que, dans une phase préalable de démarrage, l'on détecte la température des raisins avant irradiation $(T_e)$ et l'on ajuste leur vitesse de défilement dans la zone d'irradiation à une valeur calculée fonction de l'écart entre la température de consigne ($T_c$) et ladite température avant irradiation ($T_e$).

7/ Procédé de vinification selon l'une des revendications 4 ou 5, caractérisé en ce que, dans une phase préalable de démarrage, l'on détecte la température des raisins avant irradiation ($T_e$) et l'on ajuste la puissance d'irradiation à une valeur calculée fonction de l'écart entre la température de consigne ($T_c$) et ladite température avant irradiation ($T_e$).

8/ Procédé de vinification selon l'une des revendications 6 ou 7, caractérisé en ce que l'on détecte la présence de raisins, en vue de déclencher la phase de démarrage lors de l'apparition de raisins, et d'interrompre l'irradiation en cas d'absence de raisins.

9/ Procédé de vinification selon la revendication 8, caractérisé en ce que l'on détecte la présence de raisins, d'une part, en amont de la zone d'irradiation en vue du déclenchement de la phase de démarrage, d'autre part, en aval de ladite zone d'irradiation en vue de l'interruption de l'irradiation.

10/ Installation de vinification permettant de mettre en oeuvre le procédé conforme à l'une des revendications précédentes, du type comprenant au moins une cuve de fermentation (1) et un transporteur continu (3, 5, 6) adapté pour amener la vendange à défiler depuis une zone de réception (2) jusqu'aux cuves de fermentation (1), caractérisé en ce qu'un four à micro-ondes ou ondes hautes fréquences (4) est interposé sur le trajet de la vendange, ledit four étant équipé de moyens de régulation (17, 19) de l'énergie électromagnétique reçue par les raisins.

11/ Installation de vinification selon la revendication 10, caractérisée en ce que :

. le transporteur comprend un convoyeur (13) à bande transporteuse, transparente ou peu absorbante à l'égard des micro-ondes,

. le four à micro-ondes ou ondes hautes fréquences (4) est un four-tunnel traversé par le convoyeur (3) précité et équipé d'au moins un générateur d'ondes de puissance réglable (18),

. les moyens de régulation comprennent un capteur de température (10) disposé à la sortie du four-tunnel et une unité de commande (19) du générateur d'ondes, adapté pour moduler la puissance délivrée en fonction de la température $(T_g)$ détectée et d'une température de consigne $(T_c)$ préalablement mémorisée.

12/ Installation de vinification selon la revendication 11, caractérisée en ce que :

. un détecteur de présence de raisins (8) est associé au transporteur, en amont du four-tunnel (4),

. les moyens de régulation comprennent une sonde de température d'entrée (7), disposée en amont du four-tunnel (4) en particulier dans la zone de réception des raisins (2),

. les moyens de régulation sont adaptés pour commander la mise en fonctionnement du générateur d'ondes (18) lors des changements d'état du détecteur de présence (8) correspondant à l'apparition de raisins,

. les moyens de régulation sont adaptés pour régler la puissance initiale du générateur (4) à un niveau fonction de l'écart entre la température d'entrée et la température de consigne.

13/ Installation de vinification selon la revendication 10, caractérisée en ce que :

. le transporteur comprend un convoyeur (3) à bande transporteuse transparente ou peu absorbante à l'égard des ondes et est équipé d'un variateur de vitesse (11),

. le four à ondes (4) est un four-tunnel traversé par le convoyeur (3) précité et équipé d'au moins un générateur de micro-ondes ou d'ondes hautes fréquences (13),

. les moyens de régulation comprennent un capteur de température de sortie (10) disposé en aval du four-tunnel et une unité de commande (17) du variateur de vitesse, adaptée pour ajuster la vitesse du transporteur (3) en fonction de la température $(T_g)$ détectée et d'une température de consigne $(T_c)$ préalablement mémorisée.

14/ Installation de vinification selon la

16

0217683

revendication 13, caractérisée en ce que :

. un détecteur de présence de raisins (8) est associé au transporteur en amont du four-tunnel (4),

. les moyens de régulation comprennent une sonde de température d'entrée (7), disposée en amont du four-tunnel (4), en particulier dans la zone de réception des raisins (2),

. les moyens de régulation sont adaptés pour commander la mise en fonctionnement du générateur d'ondes (13) lors des changements d'état du détecteur de présence (8) correspondant à l'apparition de raisins,

. les moyens de régulation sont adaptés pour ajuster la vitesse du transporteur (3) lors de la mise en fonctionnement précitée, en fonction de la température d'entrée ($T_e$) et de la température de consigne ($T_c$).

15/ Installation selon l'une des revendications 12 ou 14, caractérisée en ce qu'elle comprend un second détecteur de présence de raisins (9) situé en aval du four-tunnel (4), les moyens de régulation étant adaptés pour arrêter le fonctionnement du générateur d'ondes (13, 18) lors des changements d'état de ce détecteur de présence (9) correspondant à la disparition des raisins.

16/ Installation selon l'une des revendications 10, 11, 12, 13 ou 14 comprenant plusieurs cuves de fermentation juxtaposées (1), caractérisée en ce que le transporteur comprend un autre convoyeur à bande transporteuse (5), passant au-dessus des cuves de fermentation et mobile de façon à pouvoir déverser les raisins tour à tour dans chaque cuve, le convoyeur (3) du four-tunnel étant agencé selon une disposition sécante par rapport à ce convoyeur de façon à déverser les raisins sur ledit convoyeur quelle que soit la position de celui-ci.

17/ Installation selon l'une des revendications précédentes, caractérisée en ce qu'elle possède une puissance d'ondes électromagnétiques installée comprise entre 5 et 20 Kilowatts/tonne-heure de raisins.

Fig. 1

Fig. 2

Fig. 3

Fig. 4

Fig . 5

Début

Initialisation $T_S, T_e, T_C$

Signal d'apparition detecteur 8 — NON

Mise en marche générateur M.O.

Vitesse de défilement initiale $f(T_C - T_e)$

Signal d'apparition detecteur 9 — NON

$T_S = T_C$ — OUI

NON

$T_S < T_C$ — NON — Augmentation vitesse de defilement $f(T_S - T_C)$

OUI

Réduction vitesse de defilement $f(T_C - T_S)$

Signal disparition detecteur 9 — NON

OUI

Arrêt

0217683

Fig. 6

Début

Initialisation $T_S, T_e, T_C$

Signal d'apparition detecteur 8 — NON

Mise en marche générateur M.O.

Puissance initiale générateur $f(T_C - T_e)$

Signal d'apparition detecteur 9 — NON

$T_S = T_C$ — OUI

NON

$T_S < T_C$ — NON → Modulation puissance générateur (réduction) $f(T_S - T_C)$

OUI

Modulation puissance générateur (augmentation) $f(T_C - T_S)$

Signal disparition detecteur 9 — NON

OUI

Arrêt

Fig. 7

# Office européen des brevets

## RAPPORT DE RECHERCHE EUROPEENNE

**0217683**

Numero de la demande

EP 86 40 1618

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| D,A | FR-A-1 496 803 (PRIMAGAZ) <br> * Résumé; figure 1 * | 1,10 | C 12 G 1/02 |
| D,A | FR-A-2 182 670 (LAFFORT) <br> * Revendication 1; figures 1,2; page 1, ligne 32 - page 2, ligne 12 * | 1,10 | |
| D,A | FR-A-2 545 500 (IMECA et al.) <br> * Revendication 1 * | 1 | |
| A | FR-A-2 352 881 (TEISSEDRE et al.) <br> * Revendication 1 * | 1 | |

-----

DOMAINES TECHNIQUES RECHERCHES (Int Cl 4)

C 12 G

Le présent rapport de recherche a été établi pour toutes les revendications

| Lieu de la recherche <br> LA HAYE | Date d'achèvement de la recherche <br> 18-11-1986 | Examinateur <br> VAN MOER A.M.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mâis publié à la date de dépôt ou après cette date
D : cité dans la demande
L : cité pour d'autres raisons

& : membre de la même famille, document correspondant

OEB Form 1503 03 82